# DEMANDE DE BREVET EUROPEEN

(11) **EP 4 632 304 A1**
(43) Date de publication de la demande: **15.10.2025**
(21) Numéro de dépôt: 25165819.1
(22) Date de dépôt: 25.03.2025
(51) Int. Cl.: F25J 1/00

(54) **PROCÉDÉ ET APPAREIL DE PRODUCTION D'UN GAZ DE SYNTHÈSE D'AMMONIAC**

(30) Priorité: 11.04.2024 FR 2403780
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: HERNANDEZ, Antoine, 75007 Paris (FR); BALI, Naila, 75007 Paris (FR)
(74) Mandataire: Air Liquide

(57) **Abrégé**

Dans un procédé de production d'un gaz de synthèse d'ammoniac, un mélange gazeux contenant de l'hydrogène, de l'argon, du monoxyde de carbone, du dioxyde de carbone et du méthane provient d'un reformeur (R) associé à une unité de combustion (H), le mélange (1) étant traité pour enlever le dioxyde de carbone qu'il contient avant d'être refroidi (3,5) et séparé dans une unité de séparation cryogénique dans une enceinte thermiquement isolée (CB), le mélange étant séparé pour fournir un liquide (21) qui est vaporisé et envoyé comme carburant à l'unité de combustion (H) ayant été épuré en monoxyde de carbone et/ou méthane.

## Description

La présente invention est relative à un procédé et appareil de production d'un gaz de synthèse d'ammoniac. Elle utilise un procédé de purification d'hydrogène par lavage à l'azote avec récupération de méthane.

Les unités de synthèse d'ammoniac sont alimentées par un mélange stœchiométrique H₂ / N₂.

Certains composés comme l'argon, le méthane, l'oxygène, CO, CO₂ ou autres sont considérés comme des inertes ou comme des poisons de catalyseurs pour la synthèse d'ammoniac.

Il est donc nécessaire de purifier l'hydrogène qui peut être produit par un réacteur de reformage à la vapeur, par un réacteur autothermique ou par un réacteur de gazéification de charbon pour ne citer que les plus fréquents.

Un des procédés de purification de cet hydrogène opère par voie cryogénique et est connu sous le nom de lavage à l'azote liquide où l'hydrogène impur est traité à contre-courant dans une colonne où l'on envoie en cuve alors que la colonne est alimentée en tête par un débit d'azote liquide.

L'hydrogène impur produit par un réacteur de reformage à la vapeur ou de gazéification au charbon est traité dans un premier temps dans une unité d'élimination des gaz acides type CO₂, H₂S pour être envoyé dans une unité de purification par adsorption pour éliminer les composants pouvant se solidifier dans la boite froide.

A la sortie de cette adsorption, l'hydrogène impur est traité dans une boite froide.

Cet hydrogène est refroidi jusqu'à une température autour de -182°C/-190°C pour alimenter la cuve d'une colonne de lavage où l'on injecte de l'azote liquide en tête. Cet azote liquide pouvant être produit par une unité de séparation d'air sous forme gazeuse et liquéfié dans l'échangeur principal.

Le liquide de la cuve de la colonne de lavage contenant les impuretés CO, Ar et CH₄ est vaporisé dans l'échangeur principal avant d'être utilisé par exemple comme carburant.

Dans le cas où la teneur de CH₄ dans l'hydrogène impur est de l'ordre de plusieurs % molaires, il est connu de WO 2012/097497 de séparer la phase liquide créé avant de rentrer dans la colonne de lavage à l'azote et ainsi produire un fluide plus riche en CH₄. Il est ainsi produit en tête de la colonne de lavage un mélange H₂+N₂ pur pour la synthèse de NH₃. Un fluide riche en CH₄ peut être recyclé en amont ou alimenter une unité de production d'H₂, ainsi qu'un fluide dit résiduaire, utilisé comme carburant, contenant un mélange de CO et d'Ar avec des teneurs résiduaires en CH₄, H₂ et N₂. Le fluide résiduaire est utilisé comme carburant et par exemple est brûlé dans une unité de combustion, par exemple une unité de combustion où la combustion a lieu dans une enceinte fermée, la chaleur de combustion étant transférée à de l'air par transfert indirect de chaleur (en anglais «Indirect Fired Heater »). La chaleur peut également être transférée par échange de chaleur direct. Cette unité de combustion peut générer de la chaleur pour un reformeur produisant un mélange de monoxyde de carbone et d'hydrogène, par exemple un reformeur auto thermique. Or elle génère des fumées contenant du CO₂ émis notamment par la combustion du CO contenu dans le fluide résiduaire.

Un but de l'invention est réduire la production de CO₂ venant de cette unité de combustion en modifiant la composition du fluide résiduaire utilisée comme carburant pour réduire sa teneur en monoxyde de carbone et/ou méthane.

Selon un objet de l'invention, il est prévu un procédé de production d'un gaz de synthèse d'ammoniac dans lequel un mélange gazeux contenant de l'hydrogène, de l'argon, du monoxyde de carbone, du dioxyde de carbone et du méthane provient d'un reformeur, le mélange étant traité pour enlever le dioxyde de carbone qu'il contient avant d'être refroidi et séparé dans une unité de séparation cryogénique dans une enceinte thermiquement isolée, le mélange étant séparé dans une première colonne de lavage à l'azote liquide pour produire en tête de colonne un premier gaz qui est le gaz de synthèse d'ammoniac et en cuve un premier liquide contenant de l'azote, de l'hydrogène, de l'argon, du monoxyde de carbone et du méthane, le liquide est séparé dans une deuxième colonne de séparation pour produire un deuxième gaz de tête de colonne enrichi en hydrogène et un deuxième liquide appauvri en hydrogène et enrichi en méthane et en argon, le deuxième liquide appauvri en hydrogène est envoyé à une troisième colonne de séparation qui produit en cuve un troisième liquide enrichi en méthane et un troisième gaz de tête qui est envoyé à une quatrième colonne de séparation qui produit en cuve un quatrième liquide enrichi en argon et un quatrième gaz en tête, le quatrième gaz étant envoyé à une cinquième colonne qui produit un cinquième liquide riche en monoxyde de carbone et un cinquième gaz riche en azote, le quatrième liquide étant vaporisé et envoyé comme carburant à une unité de combustion qui produit des fumées contenant du CO₂ et de la chaleur qui est utilisée dans le procédé de production du mélange gazeux.

Selon d'autres caractéristiques optionnelles :
- le troisième et/ou le cinquième liquide est vaporisé et envoyé en amont du reformeur.
- un carburant, par exemple du gaz naturel, est optionnellement traité dans une unité de désulfurisation, ensuite envoyé dans un préreformeur et le reformeur produisant un gaz qui est traité par au moins une opération de shift produisant le mélange contenant de l'hydrogène, de l'argon, du monoxyde de carbone, du dioxyde de carbone et du méthane.
- le troisième et/ou le cinquième liquide est envoyé en amont du préréformeur ou en amont de l'unité de désulfurisation.
- aucune partie du quatrième liquide n'est envoyée en amont du reformeur.
- au moins 50%, voire au moins 70%, du monoxyde de carbone présent dans le mélange gazeux à l'entrée de l'enceinte thermiquement isolée est recyclé en amont du reformeur.
- au moins 50%, voire au moins 70% du méthane présent dans le mélange gazeux à l'entrée de l'enceinte thermiquement isolée est recyclé en amont du reformeur.
- moins que 50% voire moins que 30% du monoxyde de carbone présent dans le mélange gazeux à l'entrée de l'enceinte thermiquement isolée est envoyé à l'unité de combustion.
- moins que 50% voire moins que 30% du méthane présent dans le mélange gazeux à l'entrée de l'enceinte thermiquement isolée est envoyé à l'unité de combustion.
- les première, deuxième, troisième, quatrième et cinquième colonnes se trouvent à l'intérieur d'une seule enceinte thermiquement isolée.

Selon un autre objet de l'invention, il est prévu un appareil de production d'un gaz de synthèse d'ammoniac comprenant une unité de séparation cryogénique comprenant une première colonne de lavage à l'azote liquide, une deuxième colonne de séparation, une troisième colonne de séparation, une quatrième colonne de séparation et une cinquième colonne, une enceinte thermiquement isolée, des moyens pour traiter un mélange gazeux contenant de l'hydrogène, de l'argon, du monoxyde de carbone, du dioxyde de carbone et du méthane provenant d'un reformeur, pour enlever le dioxyde de carbone qu'il contient, des moyens pour refroidir le mélange épuré en dioxyde de carbone, des moyens pour envoyer le mélange refroidi et épuré se séparer dans l'unité de séparation cryogénique dans l'enceinte thermiquement isolée, dans la première colonne de lavage à l'azote liquide pour produire en tête de colonne un premier gaz qui est le gaz de synthèse d'ammoniac et en cuve un premier liquide contenant de l'azote, de l'hydrogène, de l'argon, du monoxyde de carbone et du méthane, des moyens pour envoyer le premier liquide se séparer dans la deuxième colonne de séparation pour produire un deuxième gaz de tête de colonne enrichi en hydrogène et un deuxième liquide appauvri en hydrogène et enrichi en méthane et en argon, des moyens pour envoyer le deuxième liquide appauvri en hydrogène à la troisième colonne de séparation qui produit en cuve un troisième liquide enrichi en méthane et un troisième gaz de tête, des moyens pour envoyer le troisième gaz de tête à la quatrième colonne de séparation qui produit en cuve un quatrième liquide enrichi en argon et un quatrième gaz en tête, des moyens pour envoyer le quatrième gaz à une cinquième colonne qui produit un cinquième liquide riche en monoxyde de carbone et un cinquième gaz riche en azote, des moyens pour vaporiseur le quatrième liquide et des moyens pour envoyer le quatrième liquide vaporisé comme carburant à une unité de combustion qui produit des fumées contenant du CO₂ et de la chaleur qui est utilisée pour produire le mélange gazeux.

Selon d'autres aspects de l'invention, l'appareil comprend :
- des moyens de vaporisation, des moyens pour envoyer le troisième et/ou le cinquième liquide se vaporiser dans les moyens de vaporisation et des moyens pour envoyer le liquide vaporisé en amont du reformeur.
- une unité de désulfurisation et un préreformeur en amont du reformeur, une unité de shift en aval du reformeur, des moyens pour envoyer un carburant être traité dans l'unité de désulfurisation des moyens pour envoyer le carburant traité dans le préreformeur et le reformeur, des moyens pour envoyer un gaz produit par le reformeur à l'unité de shift afin de produire le mélange contenant de l'hydrogène, de l'argon, du monoxyde de carbone, du dioxyde de carbone et du méthane.

L'invention sera décrite de manière plus détaillée en se référant aux figures dans lesquelles :
[FIG. 1] représente schématiquement un procédé de production de gaz de synthèse d'ammoniac.
[FIG. 2] représente la séparation cryogénique du mélange gazeux utilisé pour produire le gaz de synthèse d'ammoniac.

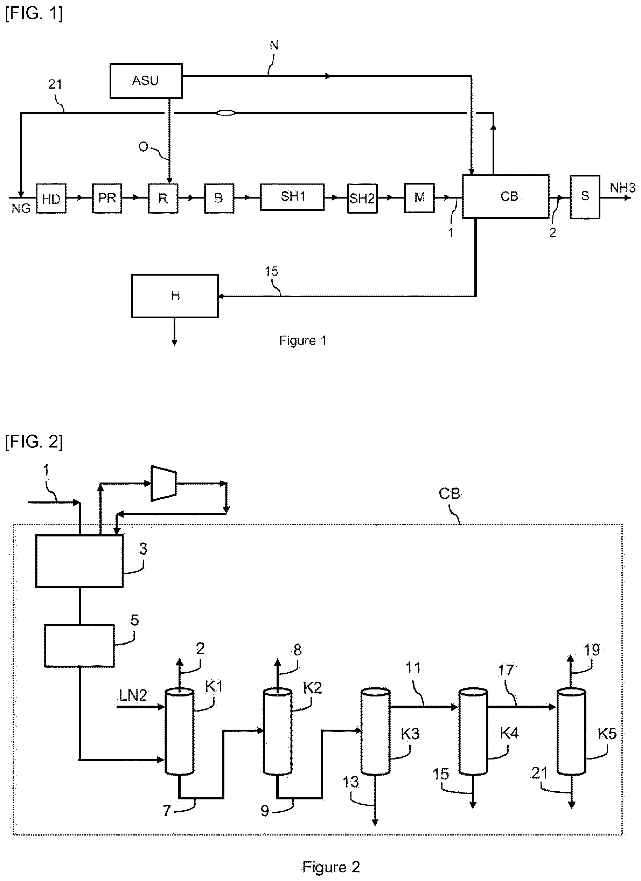

[FIG. 1] représente un procédé de production de gaz de synthèse d'ammoniac NH3 dans lequel un débit d'hydrocarbures NG, par exemple du gaz naturel est envoyé à une unité optionnelle de désulfurisation HD. Le gaz est ensuite envoyé à un préreformeur PR et à un reformeur R, par exemple de type autothermique, chauffé par la chaleur d'une unité de combustion H alimentée par des hydrocarbures NG, par exemple du gaz naturel. Le reformeur produit un gaz qui comprend majoritairement de l'hydrogène, du monoxyde de carbone, du dioxyde de carbone, du méthane et de l'argon. Ce gaz est chauffé dans une unité B, et ensuite une partie du monoxyde de carbone qu'il contient est converti en dioxyde de carbone dans deux unités de shift SH1, SH2. Les gaz acides comme le dioxyde de carbone sont enlevés en partie dans une unité de lavage M, par exemple par un procédé de type Rectisol ^{®} utilisant un lavage au méthanol. Ensuite le gaz épuré en gaz acide est envoyé dans une unité de purification par adsorption (non illustrée) pour éliminer les composants pouvant se solidifier pendant la séparation cryogénique.

Le mélange 1 rentrant dans l'enceinte cryogénique CB contenant toujours de l'hydrogène, du monoxyde de carbone, du dioxyde de carbone, du méthane et de l'argon. Le mélange est séparé par séparation cryogénique comprenant un lavage à l'azote liquide dans une unité de séparation CB qui produit le gaz de synthèse d'ammoniac 2 contenant de l'azote et l'hydrogène. Le gaz 2 est envoyé à une unité de production d'ammoniac S.

Un appareil de séparation d'air ASU produit de l'azote N pour le lavage à l'azote dans l'unité CB et de l'oxygène O pour le reformeur.

Un gaz 15 contenant de l'argon est envoyé à une unité de combustion H et un gaz 21 contenant du monoxyde de carbone et/ou du méthane est envoyé en amont du reformeur R (ou en amont du préréformeur PR ou en amont de l'unité de désulfurisation HD). L'unité de combustion H produit de la chaleur pour le reformeur R et comprend des brûleurs.

[FIG.2] représente une enceinte thermiquement isolée CB contenant deux échangeurs de chaleur 3, 5, une première colonne de séparation K1 qui est une colonne de lavage à l'azote liquide, une deuxième colonne de séparation K2, une troisième colonne de séparation K3, une quatrième colonne de séparation K4 et une cinquième colonne de séparation K5.

Le mélange 1, à la sortie de l'adsorption, contenant de l'hydrogène, du monoxyde de carbone, du dioxyde de carbone, du méthane et de l'argon est refroidi dans les échangeurs de chaleur 3, 5 jusqu'à une température autour de -182°C/-190°C. Dans ces échangeurs se liquéfie également de l'azote N provenant de la séparation d'air. Le mélange refroidi 1 est envoyé en cuve de la colonne de lavage K1 et l'azote liquéfié est envoyé en tête, de sorte qu'un gaz de synthèse d'ammoniac 2 est produit en tête de la colonne K1. Le liquide de cuve contenant de l'azote, de l'hydrogène, du monoxyde de carbone, du méthane et de l'argon est envoyé à la deuxième colonne K2 pour réduire sa teneur en hydrogène, un débit 8 enrichi en hydrogène sortant de la tête de la colonne K2 et un liquide 9 contenant proportionnellement moins d'hydrogène que le liquide 7 sort de la cuve de la colonne K2. Le liquide 9 est envoyé à une troisième colonne qui produit en cuve un liquide enrichi en méthane 13 par rapport au liquide 7 et un gaz de tête 11 appauvri en méthane par rapport au liquide 7.

Le gaz 11 est envoyé à une quatrième colonne qui produit en cuve un liquide enrichi en argon 15 par rapport au gaz 11 et un gaz de tête 17 appauvri en argon et méthane par rapport au gaz 11.

Le gaz 17 est séparé dans une cinquième colonne K5 pour produire en tête un débit 19 enrichi en azote et appauvri en monoxyde de carbone par rapport au gaz 17 et en cuve un liquide 21 enrichi en monoxyde de carbone et appauvri en azote par rapport au fluide 17.

Le liquide 15 enrichi en argon est envoyé comme carburant à l'unité de combustion H. Comme une partie du méthane a déjà été éliminé dans la colonne K3, le liquide 15 contient moins de méthane qu'il contiendrait si la colonne K3 n'était pas présente.

Le liquide 13 enrichi en méthane et/ou le liquide 21 enrichi en monoxyde de carbone sont vaporisés et envoyés soit juste en amont du reformeur R entre le reformeur R et le préreformeur PR, soit juste avant le préformeur PR soit juste avant l'unité de désulfurisation HD.

Ainsi, par séparation successive par des colonnes K1 à K5 contenant des internes permettant le transfert de masse entre les phases liquide et gaz, l'enceinte isolée thermiquement CB contenant la colonne de lavage à l'azote K1 est capable de produire un mélange H₂+N₂ pour la synthèse de NH₃, un gaz riche en CO, CH₄ contenant de l'H₂ et de l'N₂ pouvant être recyclé en amont de l'unité R qui génère le fluide riche en H₂ qui est traité dans l'enceinte isolée CB ainsi qu'un gaz résiduaire (produit en vaporisant le liquide 15) qui contient la majorité de l'argon qui ne peut être recyclé. La majorité du CO et/ou CH₄ est alors séparée et recyclée en amont, ce qui réduit leur quantité dans le fluide riche en argon et ainsi réduit considérablement la quantité de CO₂ émis par combustion du fluide riche en argon.

Au moins 50%, voire au moins 70%, du monoxyde de carbone présent dans le mélange gazeux 1 à l'entrée de l'enceinte thermiquement isolée est recyclé en amont du reformeur R.

Au moins 50%, voire au moins 70% du méthane présent dans le mélange gazeux 1 à l'entrée de l'enceinte thermiquement isolée CB est recyclé en amont du reformeur R. Moins que 50%, voire moins que 30% du monoxyde de carbone présent dans le mélange gazeux à l'entrée de l'enceinte thermiquement isolée CB est envoyé à l'unité de combustion H associée au reformeur R.

Moins que 50%, voire moins que 30% du méthane, présent dans le mélange gazeux à l'entrée de l'enceinte thermiquement isolée CB est envoyé à l'unité de combustion H associée au reformeur R.

## Revendications

1. Procédé de production d'un gaz de synthèse d'ammoniac dans lequel un mélange gazeux contenant de l'hydrogène, de l'argon, du monoxyde de carbone, du dioxyde de carbone et du méthane provient d'un reformeur (R), le mélange (1) étant traité pour enlever le dioxyde de carbone qu'il contient avant d'être refroidi (3,5) et séparé dans une unité de séparation cryogénique dans une enceinte thermiquement isolée(CB), le mélange étant séparé dans une première colonne (1) de lavage à l'azote liquide pour produire en tête de colonne un premier gaz (2) qui est le gaz de synthèse d'ammoniac et en cuve un premier liquide (7) contenant de l'azote, de l'hydrogène, de l'argon, du monoxyde de carbone et du méthane, le liquide est séparé dans une deuxième colonne de séparation (K2) pour produire un deuxième gaz de tête de colonne enrichi en hydrogène (8) et un deuxième liquide (9) appauvri en hydrogène et enrichi en méthane et en argon, le deuxième liquide appauvri en hydrogène est envoyé à une troisième colonne de séparation (K3) qui produit en cuve un troisième liquide (13) enrichi en méthane et un troisième gaz de tête (11) qui est envoyé à une quatrième colonne de séparation (K4) qui produit en cuve un quatrième liquide (15) enrichi en argon et un quatrième gaz (17) en tête, le quatrième gaz étant envoyé à une cinquième colonne (K5) qui produit un cinquième liquide (21) riche en monoxyde de carbone et un cinquième gaz (19) riche en azote, le quatrième liquide étant vaporisé et envoyé comme carburant à une unité de combustion (H) qui produit des fumées contenant du CO₂ et de la chaleur qui est utilisée dans le procédé de production du mélange gazeux.

2. Procédé selon la revendication 1 dans lequel le troisième et/ou le cinquième liquide (13, 21) est vaporisé et envoyé en amont du reformeur (5).

3. Procédé selon l'une des revendications précédentes dans lequel un carburant (NG), par exemple du gaz naturel, est optionnellement traité dans une unité de désulfurisation (HD), ensuite envoyé dans un préreformeur (PR) et le reformeur (R) produisant un gaz qui est traité par au moins une opération de shift (SH1, SH2) produisant le mélange contenant de l'hydrogène, de l'argon, du monoxyde de carbone, du dioxyde de carbone et du méthane (1).

4. Procédé selon les revendications 2 et 3 dans lequel le troisième et/ou le cinquième liquide (13, 21) est envoyé en amont du préréformeur (PR) ou en amont de l'unité de désulfurisation (HD).

5. Procédé selon l'une des revendications précédentes dans lequel aucune partie du quatrième liquide (15) n'est envoyée en amont du reformeur (R).

6. Procédé selon l'une des revendications précédentes dans lequel au moins 50%, voire au moins 70%, du monoxyde de carbone présent dans le mélange gazeux (1) à l'entrée de l'enceinte thermiquement isolée (CB) est recyclé en amont du reformeur (R).

7. Procédé selon l'une des revendications précédentes dans lequel au moins 50%, voire au moins 70% du méthane présent dans le mélange gazeux (1) à l'entrée de l'enceinte thermiquement isolée (CB) est recyclé en amont du reformeur (R).

8. Procédé selon l'une des revendications précédentes dans lequel moins que 50% voire moins que 30% du monoxyde de carbone présent dans le mélange gazeux (1) à l'entrée de l'enceinte thermiquement isolée (CB) est envoyé à l'unité de combustion (H).

9. Procédé selon l'une des revendications précédentes dans lequel moins que 50% voire moins que 30% du méthane présent dans le mélange gazeux (1) à l'entrée de l'enceinte thermiquement isolée (CB) est envoyé à l'unité de combustion (H).

10. Appareil de production d'un gaz de synthèse d'ammoniac comprenant une unité de séparation cryogénique comprenant une première colonne de lavage à l'azote liquide (K1), une deuxième colonne de séparation (K2), une troisième colonne de séparation (K3), une quatrième colonne de séparation (K4) et une cinquième colonne (K5), une enceinte thermiquement isolée (CB), des moyens (M) pour traiter un mélange gazeux (1) contenant de l'hydrogène, de l'argon, du monoxyde de carbone, du dioxyde de carbone et du méthane provenant d'un reformeur (R), pour enlever le dioxyde de carbone qu'il contient, des moyens (3,5) pour refroidir le mélange épuré en dioxyde de carbone, des moyens pour envoyer le mélange refroidi et épuré se séparer dans l'unité de séparation cryogénique dans l'enceinte thermiquement isolée, dans la première colonne de lavage à l'azote liquide pour produire en tête de colonne un premier gaz (2) qui est le gaz de synthèse d'ammoniac et en cuve un premier liquide (7) contenant de l'azote, de l'hydrogène, de l'argon, du monoxyde de carbone et du méthane, des moyens pour envoyer le premier liquide se séparer dans la deuxième colonne de séparation pour produire un deuxième gaz de tête (8) de colonne enrichi en hydrogène et un deuxième liquide (9) appauvri en hydrogène et enrichi en méthane et en argon, des moyens pour envoyer le deuxième liquide appauvri en hydrogène à la troisième colonne de séparation qui produit en cuve un troisième liquide (13) enrichi en méthane et un troisième gaz de tête (11), des moyens pour envoyer le troisième gaz de tête à la quatrième colonne de séparation qui produit en cuve un quatrième liquide (15) enrichi en argon et un quatrième gaz en tête (17), des moyens pour envoyer le quatrième gaz à une cinquième colonne qui produit un cinquième liquide (21) riche en monoxyde de carbone et un cinquième gaz (19) riche en azote, des moyens pour vaporiseur le quatrième liquide et des moyens pour envoyer le quatrième liquide vaporisé comme carburant à une unité de combustion (H) qui produit des fumées contenant du CO₂ et de la chaleur qui est utilisée pour produire le mélange.

11. Appareil selon la revendication 10 comprenant des moyens de vaporisation, des moyens pour envoyer le troisième et/ou le cinquième liquide (13, 21) se vaporiser dans les moyens de vaporisation et des moyens pour envoyer le liquide vaporisé en amont du reformeur (5).

12. Appareil comprenant une unité de désulfurisation (HD) et un préreformeur (PR) en amont du reformeur, une unité de shift (SH1, SH2) en aval du reformeur, des moyens pour envoyer un carburant (NG) être traité dans l'unité de désulfurisation (HD), des moyens pour envoyer le carburant traité dans le préreformeur (PR) et le reformeur (R), des moyens pour envoyer un gaz produit par le reformeur à l'unité de shift afin de produire le mélange contenant de l'hydrogène, de l'argon, du monoxyde de carbone, du dioxyde de carbone et du méthane (1).
